# EUROPEAN PATENT APPLICATION

(11) **EP 4 140 849 A1**
(43) Date of publication of application: **01.03.2023**
(21) Application number: 20935477.8
(22) Date of filing: 28.11.2020
(51) Int. Cl.: B61C 9/50, B61F 5/52

(54) **INDEPENDENT WHEEL SET DIRECTLY DRIVEN BY SWITCHED RELUCTANCE ELECTRIC MOTORS, AND SINGLE-AXLE BOGIE**

(30) Priority: 15.05.2020 CN 202010410228
(71) Applicant: CRRC Zhuzhou Locomotive Co., Ltd., Zhuzhou, Hunan 412001 (CN)
(72) Inventor: ZOU, Wenhui, Zhuzhou, Hunan 412001 (CN); DING, Changquan, Zhuzhou, Hunan 412001 (CN); LI, Zhenhua, Zhuzhou, Hunan 412001 (CN); XIAO, Zehua, Zhuzhou, Hunan 412001 (CN); LI, Ming, Zhuzhou, Hunan 412001 (CN); ZHOU, Qin, Zhuzhou, Hunan 412001 (CN); WANG, Linfeng, Zhuzhou, Hunan 412001 (CN); HUANG, Xiaoqing, Zhuzhou, Hunan 412001 (CN); LI, Shumin, Zhuzhou, Hunan 412001 (CN); LUO, Han, Zhuzhou, Hunan 412001 (CN); KONG, Yuanyuan, Zhuzhou, Hunan 412001 (CN)
(74) Representative: Kramer Barske Schmidtchen Patentanwälte PartG mbB
(86) International application number: PCT/CN2020/132522
(87) International publication number: WO 2021/227445

(57) **Abstract**

Disclosed are an independent wheel set (1) directly driven by switched reluctance electric motors, and a single-axle bogie. The independent wheel set (1) comprises an axle bridge (11), wherein switched reluctance electric motors (13) are respectively installed at two ends of the axle bridge (11); an inverter (13-4) and a stator (13-2) are installed on a mandrel (13-1) of each switched reluctance electric motor (13); the inverter (13-4) is located at an end of the stator (13-2); a rotor (13-3) is installed on an inner side of the housing (13-5) of each switched reluctance electric motor (13); the mandrels (13-1) are connected to the axle bridge (11); and the housing (13-5) is fixedly connected to a wheel rim (12). The independent wheel set (1) changes the structure of a traditional electric motor by means of the inverters (13-4), such that the mandrels (13-1) are immovable and assume the function of an axle; and the housing (13-5) of each electric motor rotates, and when the housing (13-5) of the electric motor and the wheel rim (12) are integrated together, the electric motor (13) and the wheel rim (12) constitute a wheel driving unit, such that a left wheel driving unit and a right wheel driving unit form the independent wheel set (1) by means of the axle bridge (11), thereby providing power for the bogie.

## Description

### FIELD OF THE INVENTION

The present invention belongs to the field of urban rail transit, and in particular relates to an independent wheel set directly driven by a switched reluctance electric motors and a single-axle bogie.

### BACKGROUND OF THE INVENTION

With the rapid development of urban rail transit, subway, light rail, etc., independent wheel set technology is used in more and more rail transit vehicles. An axle for an independent wheel set uses an axle bridge with a concave structure downward in the middle section, which can effectively reduce the height of a floor surface inside a compartment and ensure the flatness of the low floor surface inside the compartment. Bearings are installed at two ends of the axle bridge to connect with wheels, which can realize independent rotation of the wheels on both sides and effectively eliminate serpentine swing of a vehicle caused by different rotation speeds of the wheels on the inner and outer sides during turning. For example, Chinese utility model patent CN201821528027.8 disclosed an independent wheel set for a rail vehicle. In this patent, although wheels on both sides can rotate independently, bearings are still installed at two ends of an axle bridge to connect with the wheels, which results in a complex structure; and the independent wheel set needs to be driven by a driving device when installed on a bogie.

In addition, single-axle bogies with the advantages of small space usage and light weight are increasingly used in urban rail transit vehicles. However, the existing single-axle bogies have the following problems: 1, the driving device drives wheels by means of a gear transmission device, but the gear transmission device has a complex structure, high fault rate and high maintenance cost; and 2, the driving device uses a traditional asynchronous motor and permanent magnet motor, which causes low efficiency and low payload utilization of the bogie, such that the requirements of urban rail transportation cannot be met. Compared with traditional asynchronous motors and permanent magnet motors, switched reluctance electric motors with the advantages of high utilization coefficient, simple structure, high rotation speed, and high efficiency and power density are widely used in household appliances, electric vehicles, textile machinery, aviation engines, electric tools, servos and speed control systems, etc., but have not yet been used in the field of rail transit.

### SUMMARY OF THE INVENTION

In order to overcome the deficiencies of the prior art, the present invention aims to provide an independent wheel set directly driven by switched reluctance electric motors and a single-axle bogie, so as to realize self-driving of the independent wheel set, provide power for the bogie without any traditional gear transmission device, simplify the structures of the independent wheel set and the single-axle bogie, and save cost.

In order to achieve the above purpose, the technical solution adopted in the present invention is: an independent wheel set directly driven by switched reluctance electric motors includes an axle bridge, a switched reluctance electric motor is installed at each of two ends of the axle bridge, an inverter and a stator are installed on a mandrel of the switched reluctance electric motor, the inverter is located at an end of the stator, a rotor is installed inside a housing of the switched reluctance electric motor, the mandrel is connected to the axle bridge, and the housing is fixedly connected to a wheel rim.

In the above solution, the structure of the traditional motor is changed by the inverter, such that the mandrel is immovable and the housing of the electric motor rotates. The housing of the electric motor and the wheel rim are integrated together to constitute a wheel driving unit, such that a left wheel driving unit and a right wheel driving unit form the independent wheel set by means of the axle bridge to provide power and motion for a bogie. Therefore, when the independent wheel set is installed on the bogie, relevant components such as traditional gear transmission devices and couplings are not required for the bogie, and wheels can be driven by the independent wheel set, thereby reducing the design cost, manufacturing cost and maintenance cost of the bogie and improving transmission efficiency.

Preferably, the wheel rim is sleeved on the outer side of the housing.

The present invention further provides a single-axle bogie, including a frame and a brake device, the frame is composed of two side beams, a front end beam and a rear end beam, a primary suspension mounting seat is provided on the side beam, the single-axle bogie further includes the above-mentioned independent wheel set directly driven by switched reluctance electric motors, a primary suspension device is installed on the primary suspension mounting seat, one end of the primary suspension device is connected to the frame, and the other end of the primary suspension device is connected to the axle bridge; and the housing is fixedly connected to a brake disc in the brake device.

Preferably, the brake device further includes a brake installed on the mandrel of the switched reluctance electric motor.

Preferably, a secondary suspension device is further provided on the frame, the secondary suspension device includes secondary springs, secondary lateral shock absorbers and secondary vertical shock absorbers, the secondary springs are symmetrically installed at two ends of the frame, the secondary vertical shock absorbers are symmetrically installed at middle parts of the side beams, and the secondary lateral shock absorbers are installed on the side beams and are symmetrical about the center of the frame.

Preferably, a traction device and a vehicle body positioning rod are installed on the front end beam, and anti-roll torsion bars are symmetrically installed on the rear end beam.

In one of the preferred embodiments, the traction device is installed at the middle part of the front end beam, and the vehicle body positioning rods are symmetrically installed on two sides of the traction device.

Compared with the prior art, the beneficial effects of the present invention are as follows:
a) The independent wheel set of the present invention is composed of switched reluctance electric motors and wheel rims, wherein the housing of the electric motor is connected with the rotor and with the wheel rim, and the mandrel of the electric motor is connected with the stator and serves as an axle, such that wheels can rotate independently.
b) The electric motor and the wheel rim are integrated to constitute a wheel driving unit, and left and right wheel driving units are installed together with the axle bridge by interference connection to form an independent wheel set which directly provides power for the operation of a vehicle. This structure eliminates relevant components such as traditional gear transmission devices and couplings, reduces the design cost, manufacturing cost and maintenance cost of the bogie of the present invention, and improves the transmission efficiency.

### BRIEF DESCRIPTION OF THE DRAWINGS

FIG. 1 is a schematic diagram of an independent wheel set of the present invention;
FIG. 2 is a schematic structural diagram of a switched reluctance electric motor in the present invention;
FIG. 3 is a top view of a bogie of the present invention;
FIG. 4 is a front view of the bogie of the present invention;
FIG. 5 is a side view of the bogie of the present invention;
FIG. 6 is a schematic diagram of a frame in the bogie of the present invention;
FIG. 7 is a schematic diagram of a primary suspension device in the bogie of the present invention;
FIG. 8 is a structural diagram of a secondary suspension device in the bogie of the present invention;
FIG. 9 is a layout diagram of the secondary suspension device in the bogie of the present invention; and
FIG. 10 is a schematic diagram of a basic brake device in the bogie of the present invention.

### DETAILED DESCRIPTION OF THE EMBODIMENTS

The present invention will be described in detail below with reference to the accompanying drawings and in combination with embodiments. It should be noted that the embodiments in the present invention and the features in the embodiments can be combined with each other without conflicts. For ease of narrative, the terms "upper", "lower", "left" and "right" described below are only consistent with the upper, lower, left and right directions of the drawings, and do not limit the structure.

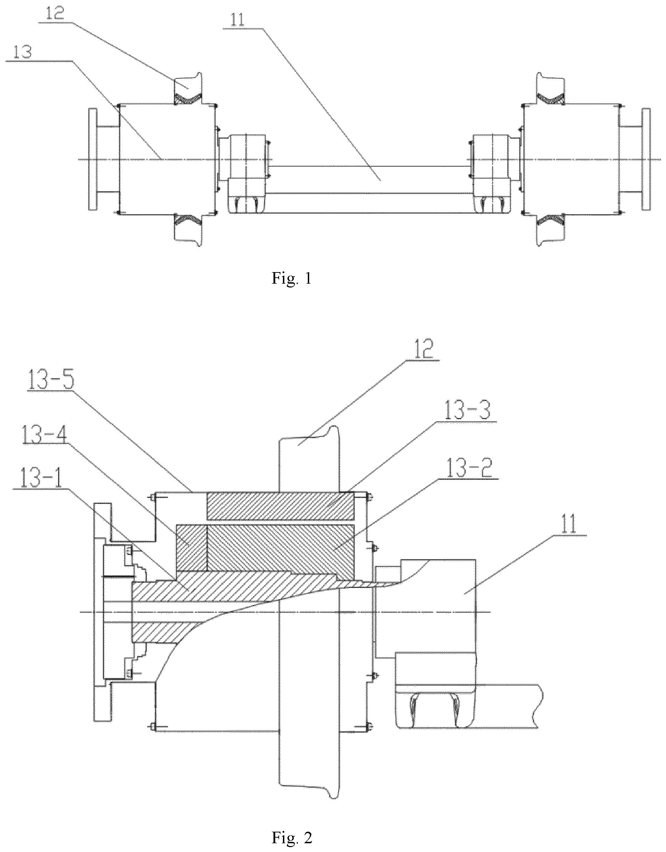

As shown in FIGS. 1 and 2, an independent wheel set directly driven by electric motors is provided. The independent wheel set 1 is composed of components such as an axle bridge 11, wheel rims 12 and switched reluctance electric motors 13, and is directly driven by the switched reluctance electric motors 13. An inverter 13-4 and a stator 13-2 are installed on a mandrel 13-1 of the switched reluctance electric motor, the inverter 13-4 is located at an end of the stator 13-2, and a rotor 13-3 is installed inside a housing 13-5 of the switched reluctance electric motor 13. The wheel rim 12 is fixed on the outer side of the housing 13-5, the wheel rim 12 and the switched reluctance electric motor 13 constitute a wheel driving unit, such that left and right wheel driving units form the independent wheel set through the axle bridge 11 in an interference fit manner to provide power and motion for a bogie 2. The part of the mandrel 13-1 that cooperates with the axle bridge 11 is of a tapered structure, the axle bridge 11 is of a tapered hole structure, and the two are rigidly connected together by interference assembly, that is, the mandrel 13-1 is inserted into the tapered hole of the axle bridge 11 to form an interference connection. The housing 13-5 is rigidly connected to the wheel rim 12 of a wheel for co-rotation.

The switched reluctance electric motor indicates that the reluctance of each magnetic circuit corresponding to each phase of the electric motor changes with the position of the rotor, so as to supply power cyclically in a phase sequence and keep the rotor rotatable in one direction to output mechanical energy. Meanwhile, there is a controllable switch circuit, which turns on and off each circuit corresponding to each phase of the electric motor reasonably and periodically according to the position of the rotor, so as to realize the continuous rotation of the rotor in a certain direction and output the mechanical energy. Based on the principle that the magnetic flux always moves along the path with the greatest permeability to form a closed loop, the switched reluctance electric motor generates a magnetic pull to form an electromagnetic torque with torque-reluctance property. Therefore, its structural principle is that the reluctance of the magnetic circuit should change as much as possible when the rotor rotates, so the switched reluctance electric motor has a double salient pole structure, and the numbers of poles of the stator and the rotor are different.

The inverter 13-4 functions to convert direct current into alternating current. The inverter 13-4 is integrated at the end of the stator 13-2 to provide alternating-current power supply for the electric motor.

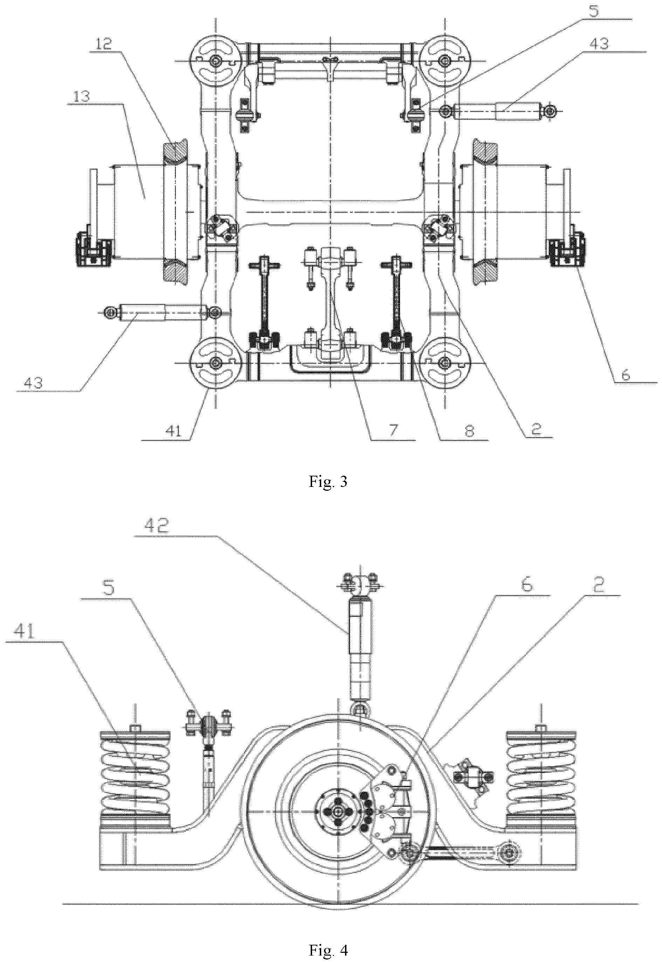

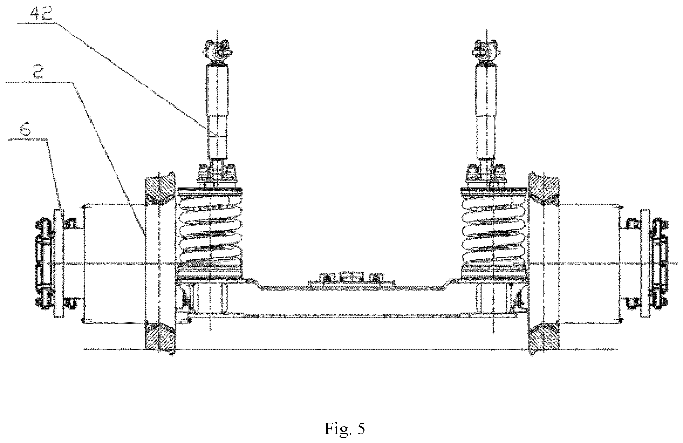

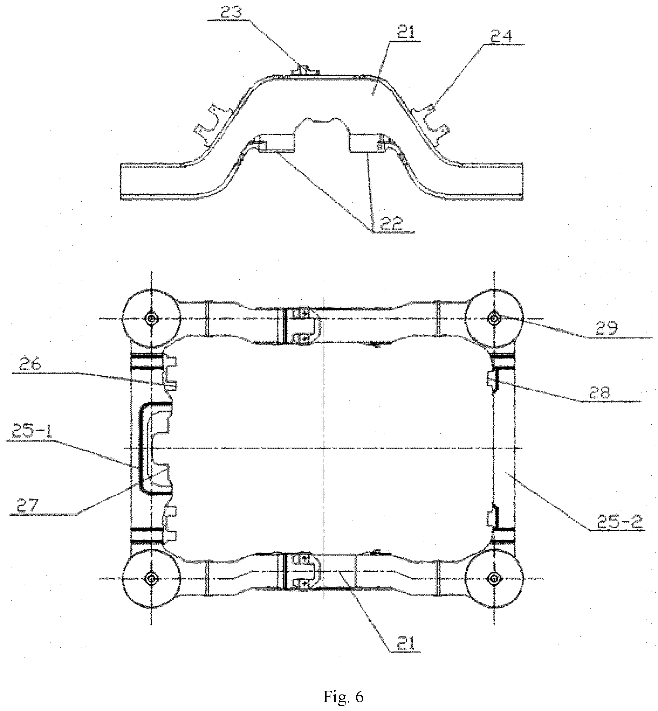

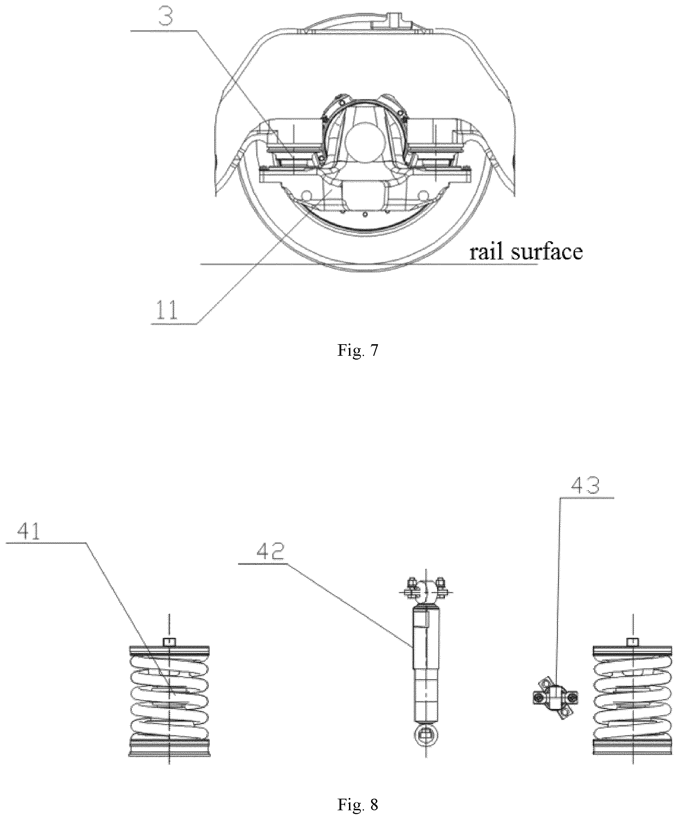

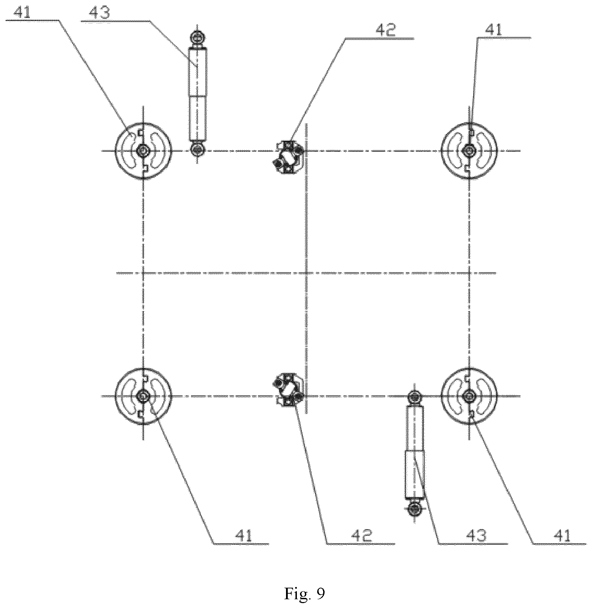

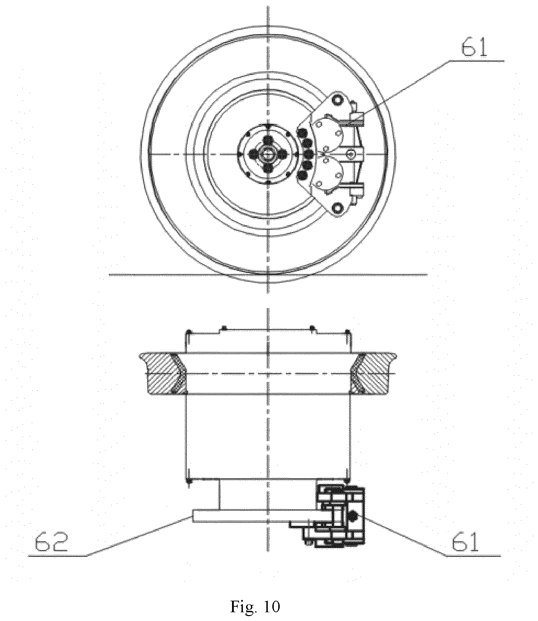

As shown in FIGS. 1 to 10, a single-axle bogie includes the above-mentioned independent wheel set 1 directly driven by switched reluctance electric motors, a frame 2, a primary suspension device 3, a secondary suspension device 4, anti-roll torsion bars 5, a brake device 6, a traction device 7 and vehicle body positioning rods 8.

The frame 2 has a mouth-shaped steel plate welded structure, and is composed of two side beams 21, a front end beam 25-1 and a rear end beam 25-2. The side beam 21 is raised at the middle part and has an inverted V-shaped structure, so as to reduce the height of a floor surface. Primary suspension mounting seats 22 are provided at the bottom of the side beam 21, secondary spring mounting seats are provided at two ends of the side beam 21, a secondary vertical shock absorber seat 23 is provided at the middle part of the side beam 21, and a secondary lateral shock absorber seat 24 is provided between the secondary spring mounting seat and the secondary vertical shock absorber seat 23 and is provided on the side beam 21. A traction seat device mounting seat 27 and vehicle body positioning rod mounting seats 26 are provided on the front end beam 25-1, and anti-roll torsion bar mounting seats 28 are installed on the rear end beam 25-2. The frame 2 is an installation base of other components of the bogie, bears the weight of the vehicle body and transmits the traction force and braking force as well as the impact load of each component in the operation process, so the force condition is very complicated.

The primary suspension device 3 uses tapered rubber springs to provide flexible support and positioning for the frame, and to transmit the forces in three directions from the wheel set to the frame of the bogie, for shock absorption and safe and reliable guidance of the wheel set.

The secondary suspension device 4 includes secondary springs 41, a secondary vertical shock absorber 42 and a secondary lateral shock absorber 43. The secondary springs 41 are high-flex helical steel springs or hourglass springs and are arranged at two ends of the frame 2 to improve the force conditions of the vehicle body and the frame, where the high-flex helical steel spring can provide vertical, lateral and longitudinal rigidity. In order to attenuate the relative motion between the vehicle body and the frame of the bogie, the secondary vertical shock absorber 42 and the secondary lateral shock absorber 43 are arranged between the vehicle body and the frame 2.

The anti-roll torsion bar 5 is installed on the anti-roll torsion bar mounting seat 28 on the rear end beam 25-2, and is connected with the vehicle body, so as to suppress and attenuate the rolling motion between the vehicle body and the frame and improve the comfort of passengers in the vehicle.

The brake device 6 uses an axle disc braking manner, and a brake 61 has a compact structure and is installed on the mandrel of the electric motor 13 by bolts. A brake disc 62 is installed on the housing of the electric motor 13 by bolts, and rotates together with the electric motor.

The traction device 7 has a low-position single pull rod structure, and rubber joints are installed at both ends to attenuate the impact between the vehicle body and the frame and adapt to the motion of the frame and the vehicle body. One end of the traction device 7 is connected to the traction seat device mounting seat 27 on the front end beam of the frame 2, and the other end is connected to a traction seat of the vehicle body, so as to realize low-position traction and effectively reduce the height of the floor surface. The vehicle body positioning rod 8 has a single pull rod structure, and vehicle body positioning rods 8 are respectively arranged on two sides of the traction device 7, rubber joints are installed at both ends of the vehicle body positioning rod, one end of the vehicle body positioning rod 8 is connected to the front end beam 25-1 of the frame, and the other end is connected to the vehicle body. By selecting appropriate torsional rigidity of the rubber joints, the pitching motion of the frame can be effectively suppressed, and the stability and safety of motion of the bogie can be improved.

## Claims

1. An independent wheel set directly driven by switched reluctance electric motors, comprising an axle bridge (11), wherein a switched reluctance electric motor (13) is installed at each of two ends of the axle bridge (11), an inverter (13-4) and a stator (13-2) are installed on a mandrel (13-1) of the switched reluctance electric motor (13), the inverter (13-4) is located at an end of the stator (13-2), a rotor (13-3) is installed inside a housing (13-5) of the switched reluctance electric motor (13), the mandrel (13-1) is connected to the axle bridge (11), and the housing (13-5) is fixedly connected to a wheel rim (12).

2. The independent wheel set directly driven by switched reluctance electric motors according to claim 1, wherein the wheel rim (12) is sleeved on an outer side of the housing (13-5).

3. A single-axle bogie, comprising a frame (2) and a brake device (6); the frame (2) is composed of two side beams (21), a front end beam (25-1) and a rear end beam (25-2), a primary suspension mounting seat (22) is provided on the side beam (21), wherein the single-axle bogie further comprises the independent wheel set directly driven by switched reluctance electric motors according to claim 1 or 2, a primary suspension device (3) is installed on the primary suspension mounting seat (22), one end of the primary suspension device (3) is connected to the frame (2), and the other end of the primary suspension device (3) is connected to the axle bridge (11); and the housing (13-5) is fixedly connected to a brake disc (62) in the brake device (6).

4. The single-axle bogie according to claim 3, wherein the brake device (6) further comprises a brake (61) installed on the mandrel (13-1) of the switched reluctance electric motor (13).

5. The single-axle bogie according to claim 3, wherein a secondary suspension device is further provided on the frame (2), the secondary suspension device comprises secondary springs (41), secondary vertical shock absorbers (42) and secondary lateral shock absorbers (43), the secondary springs (41) are symmetrically installed at two ends of the frame (2), the secondary vertical shock absorbers (42) are symmetrically installed at middle parts of the side beams (21), and the secondary lateral shock absorbers (43) are installed on the side beams (21) and are symmetrical about the center of the frame (2).

6. The single-axle bogie according to claim 3, wherein a traction device (7) and a vehicle body positioning rod (8) are installed on the front end beam (25-1), and anti-roll torsion bars (5) are symmetrically installed on the rear end beam (25-2).

7. The single-axle bogie according to claim 6, wherein the traction device (7) is installed at a middle part of the front end beam (25-1), and the vehicle body positioning rods (8) are symmetrically installed on two sides of the traction device (7).
